# EUROPEAN PATENT APPLICATION

(11) **EP 1 818 871 A1**
(43) Date of publication of application: **15.08.2007**
(21) Application number: 06002754.7
(22) Date of filing: 10.02.2006
(51) Int. Cl.: G06T 11/00, G06T 5/00

(54) **Scattered radiation correction of detector signals for projection-based imaging**

(71) Applicant: GSF-Forschungszentrum für Umwelt und Gesundheit GmbH, 85764 Neuherberg (DE)
(72) Inventor: Hoeschen, Christoph, Dr., 85241 Hebertshausen (DE); Tischenko, Oleg, Dr., 80939 München (DE); Schlattl, Helmut, Dr., 81539 München (DE)
(74) Representative: Hertz, Oliver

(57) **Abstract**

A method of correcting detector signals, in particular for scatter noise correction with an projection-based imaging device, comprises the steps of irradiating an object (1) with a radiation beam (2) including at least one discrete beam component (3, 3.1, 3.2) bounded by at least one masked angular range (4, 4.1, 4.2), so that the object (1) is partially irradiated with the beam component (3, 3.1, 3.2), detecting radiation transmitted through the object (1) with a detector device (30) comprising a plurality of detector portions (32, 32.1, 32.2, 33.1, 33.2), wherein direct radiation of the at least one beam component (3) is detected by at least one directly irradiated detector portion (32, 32.1, 32.2), detecting indirect radiation occurring in the at least one masked angular range by at least one masked detector portion (33.1, 33.2) adjacent to the at least one directly irradiated detector portion (32, 32.1, 32.2), and correcting detector signals of the at least one directly irradiated detector portion (32, 32.1, 32.2) in dependence on the at least one detector signal of the at least one masked detector portion (33.1, 33.2) for providing corrected detector signals. Furthermore, an imaging device for projection-based imaging is described.

## Description

### Technical field

The present invention relates to a method of correcting detector signals, in particular for projection-based imaging, like e.g. correcting detector signals of an imaging device for projection radiography or for imaging tomography. Furthermore, the present invention relates to a method and a device for imaging a region of investigation using the above method of correcting detector signals.

### Technical Background

The non-destructive investigation of objects is an important objective in various technical fields like material sciences, non-destructive testing, medical examinations, archaeology, construction technique, techniques concerning security matters etc.. The classical approach for non-destructive investigation is based on an imaging of the object with projection radiography. The object is radiated with a radiation beam, like e.g. an X-ray beam, which is attenuated due to an interaction with the object. Detecting the radiation beam transmitted through the object provides attenuation data on the basis of which an image of the object can be reconstructed. A more complex approach for obtaining an image of the object, e.g. by computer tomography (CT) is based on an irradiation through an object plane from different projection directions with X-rays, followed by the reconstruction of the object plane on the basis of attenuation data measured at different directions. The entirety of the measured attenuation data can be described in terms of so-called Radon data in a Radon space.

Different reconstruction methods for Radon data are known today, which in particular comprise iterative reconstruction methods and filtered back-projection methods. A further improved method of reconstructing image functions from Radon data is described in EP 04031043.5 (unpublished on the filing date of the present patent specification). With this method of using orthogonal polynomial expansions on the disk (in the following: OPED algorithm), an image function representing the region of investigation is determined from Radon data as a sum of polynomials multiplied with values of projection functions measured corresponding to a plurality of predetermined projection directions through the region of investigation.

The above projection-based imaging methods have a common disadvantage in terms of scattering noise generated by radiation scattering within the object. The generation of scattering noise e.g. in medical X-ray imaging can be described as follows. The physical basis of an X-ray image is the absorption of photons emitted by an X-ray tube within the body under investigation. Since the organs (including bones) have different absorption properties, the number of photons passing through the body (primary photons) differs along each direction of the X-ray beam. The differing number of photons is detected with a detector device for providing the above attenuation data. However, photons are not only absorbed within the body, but are also scattered, mainly on electrons so that in particular secondary photons are generated. Depending on the size of the detector device, some of these scattered secondary photons will also be detected and recorded. Within the detector signals, the contributions of the secondary photons cannot be distinguished from the contributions of the primary photons. The secondary photons contain only very weak structural information so that the contributions thereof occur as the scattering noise only. As a result, the projection image reconstructed with attenuation data derived from the detector signals is deteriorated.

A variety of strategies have been proposed for minimizing the scattering noise. A practical approach is based on providing an anti-scatter grid or an air gap between the object under investigation and the detector device for reducing the probability of secondary photons being recorded. However, secondary photons can be suppressed with this technique to a limited extend only. Secondary photons travelling along the beam path of the primary photons cannot be suppressed and the primary photons transmitted through the object are reduced as well. Accordingly, the radiation detection can be deteriorated by anti-scatter grids arranged in front of the detector device. Another conventional approach is based on theoretical models to determine the contribution of scattering noise in the signal (see e.g. B. Ohnesorge et al. in "Eur. Radiol." vol. 9, 1999, p. 563-569). The theoretical models suffer from the limitation of reduced efficiency.

Initially, scattering noise was not a major concern in computer tomography as the detector sizes are very small, and thus, only a few secondary photons were recorded. However, with increasing detector size, in particular with multi-slice CT devices, this problem becomes more prominent, all the more since circular CT devices with large flat panel detectors are planned.

The above disadvantages are associated not only with the conventional CT imaging, but also with all available reconstruction methods based on radiation beam projection through the object under investigation.

### Objective of the invention

The objective of the invention is to provide an improved method of correcting detector signals avoiding the disadvantages of the conventional projection-based object imaging. In particular, the objective of the invention is to overcome the restrictions in the conventional suppression or theoretical estimation of the secondary photons contributions in recorded projection images and to provide an improved quantitative evaluation of the scattering noise. According to a particular aspect, the objective of the invention is to provide the improved imaging device which allows the recording of improved images based on projection imaging with reduced scattering noise.

The above objectives are achieved with methods or devices comprising the features of patent claims 1 or 14. Advantageous embodiments and applications of the invention are defined in the dependent claims.

### Summary of the invention

Relating to the detector signal correction method, the present invention is based on the general technique of irradiating an object under investigation with a masked radiation beam and detecting direct radiation travelling along a straight projection beam path of at least one beam component of the radiation beam and indirect radiation leaving the beam path of the at least one beam component due to scattering in the object. Detector signals of at least one directly irradiated detector portion are corrected in dependence on at least one detector signal of at least one adjacent detector portion recording indirect radiation only. The attenuation data to be obtained for projection-based imaging are derived from the corrected detector signals.

In contrast to the conventional strategies, an amount of scatter radiation in the immediate neighbourhood of the at least one beam component is directly measured. Although this amount of scatter radiation is detected with at least one detector portion, which is not directly irradiated with the at least one beam component, an essentially improved correction of the directly transmitted beam component can be obtained. The scattering noise only weakly contains structural information, so that it is rather smoothly distributed. The inventors have found that the detector signals of one or more masked detector portions adjacent to a directly irradiated detector portion can be used for quantitatively determining the scatter contribution in the directly irradiated detector portion. By this method, the desired corrected detector signals including contributions almost solely from primary photons can be restored to a high degree, so that the image quality can be strongly improved.

Relating to the device, the present invention is based on the general technique of providing an imaging device for projection-based imaging of an object under investigation having a beam source for irradiating the object, a detector device for detecting direct radiation travelling along the beam path of the at least one beam component and indirect radiation outside of the beam path, and a correction device being adapted for correcting detector signals of the directly irradiated detector portion in dependence on a detector signal of the masked detector portion. The imaging device equipped with the correction device provides images with an essentially improved quality. Almost the complete scatter noise can be suppressed in the image of the object.

According to a preferred embodiment of the invention, the at least one discrete beam component for direct transmission through the object is formed by shaping the radiation beam emitted from a beam source. Preferably, the radiation beam is shaped with a beam mask having at least one mask through-hole, which is arranged between the beam source and the object under investigation. Accordingly, the imaging device of the invention can be provided with a beam mask for shaping the radiation beam of the beam source, wherein the beams mask is arranged in a distance between the beam source and the holding device. In contrast to conventional anti-scatter grids, the beam mask is positioned, relative to the travelling direction of the radiation beam, before the object. The radiation detection cannot be deteriorated as in the case of the conventional anti-scatter grids. Advantageously, the beam mask provides a variability in shaping the radiation beam. The size and number of the at least one through-hole transmitting the at least one beam component can be selected in dependence on the particular projection-based imaging task.

According to a particularly preferred embodiment of the invention, the beam mask is arranged at the beam source. The beam mask is preferably connected with the beam source. Accordingly, the beam mask can be moved with the beam source, if necessary. Furthermore, the size of the beam mask can be minimized.

Generally, the detector signal correction can be provided with one single beam component bounded by one or more masked (or shielded) angular ranges in which the radiation beam is blocked. However, according to a particularly preferred embodiment of the invention, the radiation beam is shaped with a plurality of discrete beam components. Accordingly, the beam mask comprises a plurality of mask through-holes for shaping the radiation beam with the plurality of beam components. In this case, the radiation beam is divided by the beam mask into a bunch of beam components passing the object or at least a region of investigation within the object. For each of the beam components, indirect radiation is detected with one or more detector portions adjacent to the directly irradiated detector portion of the related beam component. With a plurality of discrete beam components, the efficiency of image recording is essentially increased.

Advantageously, the detector signal correction of the invention can be combined with available image reconstruction techniques. Attenuation data derived from the corrected detector signals can be subjected to an iterative image reconstruction or the filtered back-projection algorithm. If the corrected detector signals are provided for an image reconstruction based on the above OPED algorithm, further advantages are obtained. With the OPED algorithm, attenuation values of a discrete set of beam components are processed. Advantageously, the masked radiation beam used for the method of the invention is even adapted to this discrete geometry used for the OPED algorithm. According to a particular preferred embodiment of the invention, the discrete beam components are formed with the beam mask with a uniform angular distribution, which represents the best adaptation of the irradiation geometry to the requirements of the OPED algorithm.

The detector signal correction of the invention can be simplified if a background (scatter) signal derived from the shielded detector portions is subtracted from the detector signals of the directly irradiated detector portion(s). Advantageously, the scatter noise contribution can be compensated by a simple mathematical operation, which preferably is performed by a subtraction unit included in the correction device for calculating the corrected detector signals.

Preferably, the background signal is obtained by an interpolation between the detector signals obtained from masked detector portions on opposite sides of the directly irradiated detector portion. Alternatively, the background signal is obtained as an average signal of one masked detector portion only being arranged adjacent to the directly irradiated detector portion.

Various conventional interpolation algorithms are available or calculating the background signals. As the detector signals of the masked detector portions are smoothly distributed, a linear interpolation between the averaged detector signals of the masked detector portions can be used according to a preferred feature of the invention. Alternatively, other interpolation algorithms can be implemented, like e.g. a cubic interpolation.

For a simple non-destructive investigation of the object, the recording of one single projection of the energy beam component can be sufficient. However, according to a preferred embodiment of the invention, the steps of irradiating the object with the at least one discrete beam component and detecting the direct and indirect radiation contributions are repeated with a plurality of different orientations of the at least one discrete beam component relative to the object. Particularly preferred is a rotation of the beam source with the beam mask around the object. Advantageously, a complete image of the object can be reconstructed on the basis of the corrected detector signals obtained with the different irradiation orientations.

Another important advantage of the invention is related to the fact that there is no restriction to a particular projection-based imaging method. The detector signal correction can be used for any conventional projection radiography, like conventional X-ray imaging or neutron radiation imaging. According to a preferred implementation of the invention, the irradiating and detecting steps for recording the direct and indirect detector signals are performed with a computer tomography device (CT device). Advantageously, the structure of a CT device is adapted to the irradiation and detection geometry used according to the invention.

Relating to method features, an independent subject of the invention is an imaging method, in particular for projection-based imaging, wherein an image of the object is reconstructed on the basis of detector signals corrected with the above correction method of to the invention. The image reconstruction is conducted with at least one of the iterative algorithm, the filtered back-projection algorithm or the OPED algorithm.

### Brief description of the drawings

Further details and advantages of the invention are described in the following with reference to the attached drawings, which show in:
- Figure 1: a schematic representation of a first embodiment of an imaging device according to the invention;
- Figure 2: a flow chart illustrating an embodiment of the correction method according to the invention;
- Figure 3: details of a further embodiment of an imaging device according to the invention;
- Figure 4: schematic illustrations of beam masks used according to the invention;
- Figure 5: a schematic illustration of a further embodiment of an imaging device according to the invention; and
- Figure 6: images illustrating the advantages of the methods according to the invention.

### Embodiments of the invention

The invention is described in the following with reference to the preferred application in computer tomography. It is emphasized that the invention can be implemented in an analogous way with the application of other types of energy input beams (like e.g. neutrons or light, e.g. in the VIS or IR range) and/or other types of projection-based imaging (like e.g. projection radiography). Furthermore, the following description of the preferred embodiments mainly refers to the data collection and data processing. Details of the CT devices used for implementing the invention are not described as long as they are known from conventional CT devices.

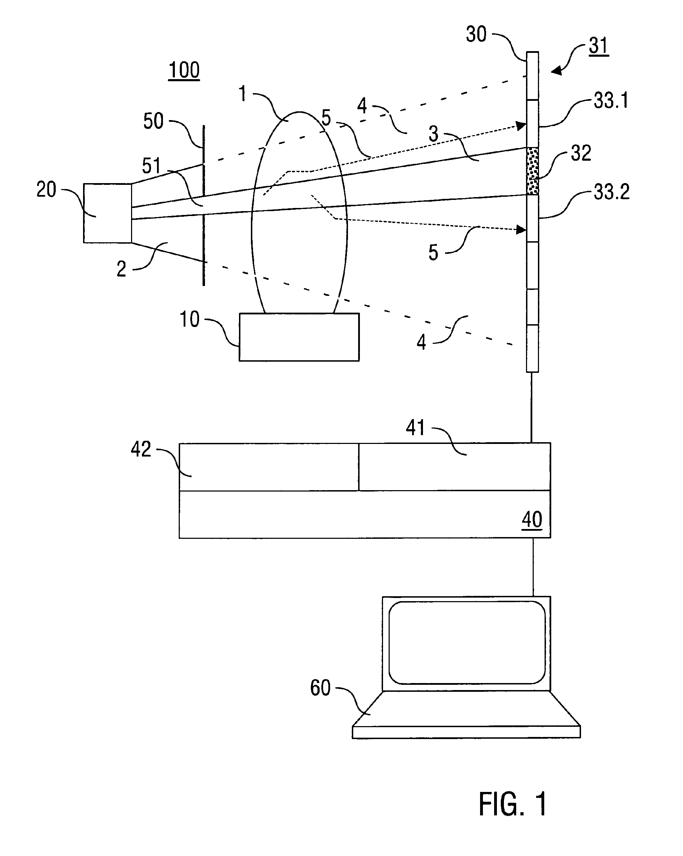

A first embodiment of the imaging device 100 according to the invention is adapted for irradiating the object 1 under investigation with a single discrete beam component 3 as illustrated in Figure 1. The imaging device 100 comprises a holding device 10, a beam source 20, a detector device 30, a correction device 40, a beam mask 50 and a control device 60.

The holding device 10 is a carrier for supporting or hanging the object 1 in the radiation field of the beam source 20. As an example, the holding device 10 comprises a carrier table as it is known from CT devices. The beam source 20 comprises e.g. an X-ray tube emitting a fan or cone beam of X-rays as it is known from conventional X-ray tubes.

The beam mask 50 comprises a plane plate made of a shielding material, like e.g. tungsten or lead. With the illustrated embodiment, the beam mask 50 includes one single through-hole 51, which can be passed by a part of the radiation beam emitted from the energy beam source 20. In the illustrated example, the radiation beam 2 emitted by the beam source 20 is shielded with the beam mask 50 so that the discrete beam component 3 is directed through the object 1 to the detector device 30, while the adjacent angular ranges 4 are masked.

The detector device 30 comprises a flat panel detector including a plurality of detector elements (pixel) 31. The detector device 30 comprises e.g. a straight arrangement of the detector elements 31 each of which having a width in the range of about 0.1 mm to 1 mm. Advantageously, the method of the invention does not set any constrains on the size of each detector element 31.

The detector elements 31 of the detector device 30 can be assigned to different detector portions depending on the radiation detected. The detector elements directly irradiated along the straight beam path of the discrete beam component 3 are assigned to the irradiated detector portion 32, while the detector elements in the immediate neighbourhood of detector portions 32 are assigned to masked detector portions 33.1, 33.2.

The size ratio of the irradiated detector portion 32 and the masked detector portions 33.1, 33.2 can be adjusted and optimised in dependence on the demands of the respective imaging process. In particular, each of the masked detector portions 33.1, 33.2 adjacent to the directly irradiated detector portion 32 may comprise one single detector element only or a plurality of detector elements. Depending on the number of detector elements of a masked detector portion, the interpolation is to be weighted. Due to scattering within the object 1, scatter radiation 5 is travelling along irregular directions to the masked detector portions 33.1, 33.2.

The correction device 40 comprises an interpolation unit 41 and a subtraction unit 42 for calculating corrected detector signals. Furthermore, the correction device 40 can comprise further circuit components, in particular for assigning detector elements 31 to directly irradiated or masked detector portions.

The control device 60 is adapted for controlling the correction device 40, the energy beam source 20, the read-out of the detector device 30 and possibly the relative arrangement of the holding device 10 and the energy beam source 20. Both the correction device 40 and the control device 60 can be implemented with a common electronic circuit, like a computer unit. Furthermore, the control device 60 can comprise a display for monitoring the operation of the imaging device 100 and the results of the imaging.

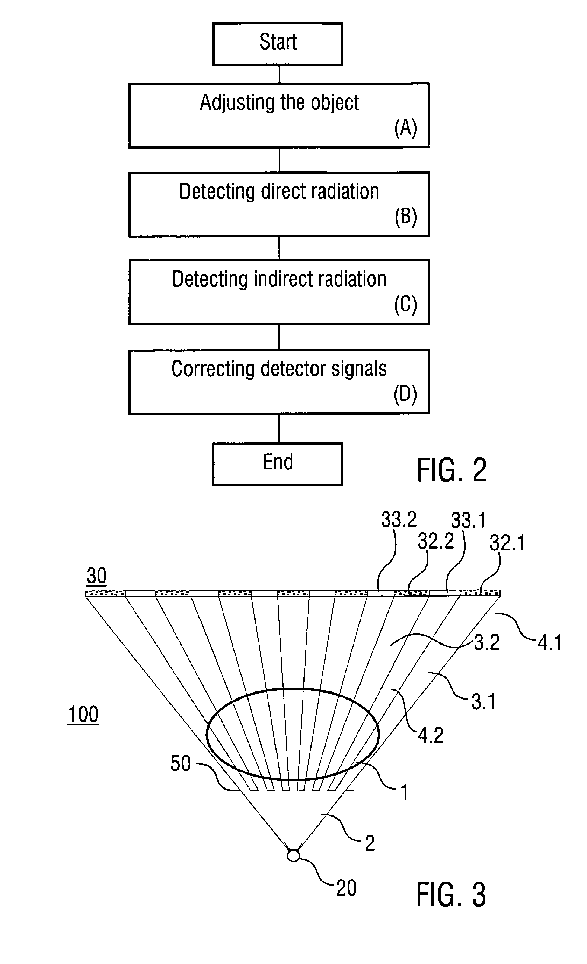

The detector signal correction method of the invention comprises the procedural steps summarized in Figure 2. Firstly, the object 1 and the beam source 20 are adjusted relative to each other (step A). Step A includes the assignment of detector elements to one of the detector portions 32 or 33.1, 33.2. This assignment can be obtained by a comparison of the detector signal of each detector element with a threshold value. All detector elements with a detector signal above the threshold value are assigned to the directly irradiated detector portion 32, while the remaining detector elements are assigned to the masked detector portions 33.1, 33.2.

Subsequently, the beam source 20 is operated for an irradiation of the object 1 through the mask 50. With the irradiation, the direct radiation of the discrete beam component 3 (step B) and the indirect radiation scattered in the object 1 (step B) are simultaneously detected with the detector portions 32 and 33.1, 33.2, respectively.

According to the number of detector elements assigned to the directly irradiated detector portion 32, a plurality of detector signals are recorded. Each masked detector portion 33.1, 33.2 can comprise a plurality of detector elements as well. For providing one characteristic detector signal for each of the masked detector portions 33.1, 33.2, the individual detector signals of the detector elements assigned to the masked detector portions 33.1, 33.2 are averaged.

Finally, corrected detector signals are calculated (step D). Firstly, a background signal is obtained by a linear interpolation between the characteristic (average) detector signals obtained with the masked detector portions 33.1, 33.2. Depending on the number of detector elements, which belong to the masked detector portions 33.1, 33.2, the characteristic detector signals and/or the interpolation is weighted. The background signal is subtracted from each of the detector signals of the detector elements 31 in the directly irradiated detector portion 32. Finally, attenuation data corresponding to the corrected detector signals are provided for image processing. If, according to an alternative embodiment of the invention, only one masked detector portion is used for recording scatter noise, the background signal is directly obtained from the characteristic (average) detector signal obtained with the masked detector portion.

Figure 3 illustrates details of an alternative embodiment of the imaging device 100 according to the invention. Imaging device 100 includes the beam source 20, the beam mask 50 and the detector device 30. The beam source 20 is adapted for emitting an X-ray fan beam 2, which is shaped with the beam mask 50 into a plurality of discrete beam components 3.1, 3.2, .... Each of the discrete beam components 3.1, 3.2, ... is bounded by masked angular ranges 4.1, 4.2, ... wherein the radiation beam 2 is shielded. Accordingly, the detector elements of detector device 30 can be assigned to directly irradiated detector portions 32.1, 32.2, ... separated by masked detector portions 33.1, 33.2, .... Only the detector elements of the directly irradiated detector portions 32.1, 32.2, ... detect the projection image of the object 1 including primary and secondary photons. The remaining elements (masked detector portions 33.1, 33.2 ...) are used to determine the contribution of the secondary photons only.

For correcting the signals of a particular directly irradiated detector portion (e.g. 32.2), the related background signal is calculated by interpolation of the average detector signals of the immediately adjacent masked detector portions (e.g. 33.1, 33.2). The average detector signal of one of the masked detector portions (e.g. 33.1) is used for calculating the background signals corresponding to the immediately adjacent directly irradiated detector portions (e.g. 32.1, 32.2).

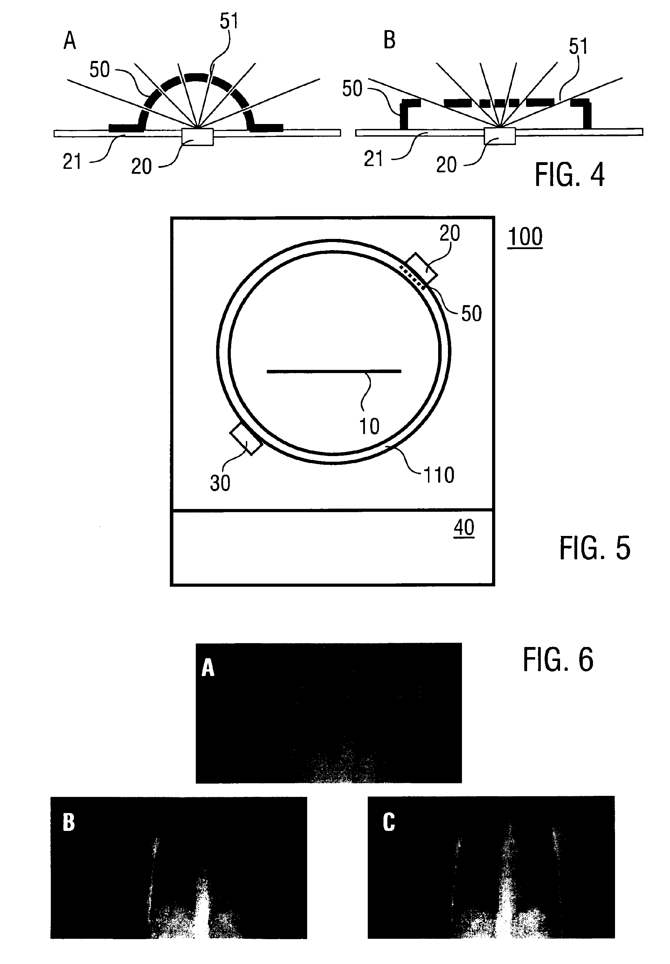

Examples of the beam mask 50 in combination with the beam source 20 are schematically illustrated in Figure 4. The beam mask 50 can have a spherical shape (Figure 4A) or a plane shape (Figure 4B) or any other appropriate shape adapted to the geometric conditions of the imaging device. Each beam mask 50 comprises a plurality of through-holes 51, preferably arranged with an equal arc length spacing. The beam mask 50 is fixed to the beam source 20, in particular to a frame 21 of the beam source 20, preferably by a detachable fixing element like e.g. a clip element or a snap connection. The beam mask 50 comprises e.g. 200 through-holes 51 for providing 200 discrete beam components.

Generally, the size, shape and through-hole number of a mask can be adapted to the particular irradiation geometry used in an imaging device. The shape of the through-holes can be adapted to the orientation of the detector device 30 relative to the beam source 20. As an example, slit-shaped through-holes 51 can be provided.

Figure 5 illustrates a further embodiment of an imaging device 100 according to the invention, which is structured like a conventional CT device with the holding device 10, the beam source 20, the detector device 30 and the correction device 40. The beam source 20 with the beam mask 50 is rotatable with the detector device 30 around an object on the holding device 10. Both components 20, 30 can be rotated in the CT gantry 110 as it is known from conventional CT devices.

Figure 6 illustrates simulation results showing the capabilities of the method according to the invention. A Monte Carlo code has been used to simulate a thorax X-ray image with the beam mask in front of the beam source. The image of Figure 6A is reconstructed from Radon data recorded in the directly irradiated detector portions including both primary and secondary photons (conventional image). Figure 6B illustrates the image which would result if only primary photons would be recorded, while Figure 6C illustrates the results when subtracting the scatter data recorded by the masked detector portions from the signal of the detector elements in the directly irradiated detector portions. As a result, a good agreement of the desired scatter-free image (Figure 6B) is obtained with the invention (Figure 6C) which is considerably improved compared with the conventional image (Figure 6A).

## Claims

1. Method of correcting detector signals, in particular for scatter noise correction with an projection-based imaging device, comprising the steps of:
- irradiating an object (1) under investigation with a radiation beam (2) including at least one discrete beam component (3, 3.1, 3.2, ...) bounded by at least one masked angular range (4, 4.1, 4.2, ...), so that the object (1) is partially irradiated with the beam component (3, 3.1, 3.2, ...),
- detecting radiation transmitted through the object (1) with a detector device (30) comprising a plurality of detector portions (32, 32.1, 32.2, ..., 33.1, 33.2, ...), wherein direct radiation of the at least one beam component (3) is detected by at least one directly irradiated detector portion (32, 32.1, 32.2),
- detecting indirect radiation occurring in the at least one masked angular range by at least one masked detector portion (33.1, 33.2, ...) adjacent to the at least one directly irradiated detector portion (32, 32.1, 32.2, ...), and
- correcting detector signals of the at least one directly irradiated detector portion (32, 32.1, 32.2, ...) in dependence on the at least one detector signal of the at least one masked detector portion (33.1, 33.2, ...) for providing corrected detector signals.

2. Method according to claim 1, wherein the radiation beam (2) is shaped with a beam mask (50) arranged between a beam source (20) and the object (1).

3. Method according to claim 2, wherein the radiation beam (2) is shaped with a beam mask (50) arranged at the beam source (20).

4. Method according to claim 2 or 3, wherein the radiation beam (2) is shaped with a plurality of the discrete beam components (3, 3.1, 3.2, ...) bounded by a plurality of the masked angular ranges (4, 4.1, 4.2, ...).

5. Method according to claim 4, wherein the discrete beam components (3.1, 3.2, ...) are formed with a uniform angular distribution.

6. Method according to at least one of the foregoing claims, wherein the at least one discrete beam component (3, 3.1, 3.2, ...) is bounded by at least two masked angular ranges (4, 4.1, 4.2, ...) arranged on opposite sides of the at least one discrete beam component (3, 3.1, 3.2, ...).

7. Method according to at least one of the foregoing claims, wherein the corrected detector signals are calculated by subtracting a background signal from the detector signals of the at least one directly irradiated detector portion (32, 32.1, 32.2, ...), the background signal being derived from the at least one detector signal of the at least one masked detector portion (33.1, 33.2, ...).

8. Method according to claim 6 and 7, wherein the background signal is calculated by an interpolation between the detector signals of the at least two masked detector portions (33.1, 33.2, ...).

9. Method according to claim 7, wherein the at least one discrete beam component is bounded by one single masked angular range and the background signal is equal to the detector signal of the masked detector portion.

10. Method according to at least one of the foregoing claims, wherein the steps of irradiating the object and detecting radiation transmitted through the object are repeated for a plurality of different orientations of the at least one discrete beam component relative to the object (1).

11. Method according to at least one of the foregoing claims, wherein the irradiating and detecting steps are performed with a computer tomography device (100).

12. Imaging method, in particular for an projection-based imaging, comprising the steps of:
- correcting detector signals with a method according to at least one of the foregoing claims, and
- reconstructing an image of the object.

13. Imaging method according to claim 12, wherein the reconstructing step comprises an application of at least one of:
- an iterative reconstruction algorithm,
- a filtered back-projection algorithm, and
- a reconstruction algorithm based on orthogonal polynomials.

14. Imaging device (100), in particular for projection-based imaging of an object (1) under investigation, comprising:
- a beam source (20) for irradiating the object (1) with a radiation beam (2) including at least one discrete beam component (3, 3.1, 3.2, ...) bounded by at least one masked angular range (4, 4.1, 4.2, ...), so that the object (1) is partially irradiated with the beam component (3), and
- a detector device (30) comprising a plurality of detector portions (32, 32.1, 32.2, ..., 33.1, 33.2, ...) for detecting radiation transmitted through the object (1), wherein the detector portions (32, 32.1, 32.2, ..., 33.1, 33.2, ...) include at least one directly irradiated detector portion (32, 32.1, 32.2, ...) arranged for detecting direct radiation of the at least one beam component (3), wherein
- the detector portions include at least one masked detector portion (33.1, 33.2, ...) adjacent to the at least one irradiated detector portion (32, 32.1, 32.2, ...) and being arranged for detecting indirect radiation (5) occurring in the at least one masked angular range, and
- the detector device (30) is connected with a correction device (40) for providing corrected detector signals by correcting detector signals of the at least one directly irradiated detector portion (32, 32.1, 32.2, ...) in dependence on at least one detector signal of the at least one masked detector portion (33.1, 33.2, ...).

15. Imaging device according to claim 14, further comprising a holding device (10) for accommodating the object (1).

16. Imaging device according to claim 15, further comprising a beam mask (50) for shaping the radiation beam, wherein the beam mask (50) is arranged between the beam source (20) and the holding device (10).

17. Imaging device according to claim 16, wherein the beam mask (50) is connected with the beam source (20).

18. Imaging device according to claim 16 or 17, wherein the beam mask (50) comprises a plurality of through-holes (51) for shaping the radiation beam (2) with a plurality of the discrete beam components (3, 3.1, 3.2, ...) bounded by a plurality of the masked angular ranges (4, 4.1, 4.2, ...).

19. Imaging device according to claim 18, wherein the mask through-holes (51) are formed with a uniform angular distribution.

20. Imaging device according to at least one of the claims 14 to 19, wherein the correction device (40) includes a subtraction unit (41) for calculating the corrected detector signals by subtracting a background signal from the detector signals of the at least one irradiated detector portion (32), the background signal being derived from the detector signal of the at least one masked detector portion (33).

21. Imaging device according to at least one of the claims 14 to 20, wherein the detector portions include at least two masked detector portion (33.1, 33.2, ...) being adjacently arranged on opposite sides of the at least one irradiated detector portion (32, 32.1, 32.2, ...).

22. Imaging device according to claim 20 and 21, wherein the correction device.(40) includes an interpolation unit (42) for calculating the background signal by an interpolation between the detector signals of the at least two masked detector portions (33.1, 33.2, ...).

23. Imaging device according to at least one of the claims 14 to 22, wherein the beam source (20) is movable relative to the holding device (10).

24. Imaging device according to at least one of the claims 14 to 23, wherein the holding device (10), the beam source (20) and the detector device (30) comprise a computer tomography device.
